# EUROPÄISCHE PATENTSCHRIFT

(11) **EP 0 520 537 B1**
(45) Veröffentlichungstag und Bekanntmachung des Hinweises auf die Patenterteilung: **20.09.1995**
(21) Anmeldenummer: 92201604.3
(22) Anmeldetag: 04.06.1992
(51) Int. Cl.: B60R 21/20

(54) **Aufprall-Schutzvorrichtung**
Passenger restraint device
Dispositif de retenue pour passager

(30) Priorität: 25.06.1991 DE 4120852
(43) Veröffentlichungstag der Anmeldung: 30.12.1992
(73) Patentinhaber: KOLBENSCHMIDT Aktiengesellschaft, D-74150 Neckarsulm (DE)
(72) Erfinder: Kreuzer, Martin, W-8751 Kleinwallstadt (DE); Barrenscheen, Frank, W-8754 Grossostheim 3 (DE)
(74) Vertreter: Müller, Kurt

(56) Entgegenhaltungen:
- EP-A- 0 428 935
- EP-A- 0 461 276
- DE-A- 3 918 281
- FR-A- 2 662 410

## Beschreibung

Die Erfindung betrifft eine Aufprall-Schutzvorrichtung für die Beifahrerseite eines Kraftfahrzeugs der im Gattungsbegriff des Patentanspruchs 1 angegebenen Art. Eine solche Vorrichtung ist aus EP-A-0 428 935 bekannt.

Bekanntlich kann bei einem Aufprall des Kraftfahrzeugs auf ein massives Hindernis der Aufschlag, insbesondere des Kopfs und des Brustkorbs des Fahrzeuglenkers auf das Lenkrad, bedingt durch die rotatorische Vorwärtsbewegung des Oberkörpers aufgrund der starken Fahrzeugverzögerung nur unzureichend mit dem Sicherheitsgurt verhindert werden. Eine deutliche Reduzierung der dabei auftretenden schweren Verletzungen kann jedoch durch den Einsatz der Kombination aus Sicherheitsgurt und einer in das Lenkrad integrierten Gassack-Aufprall-Schutzvorrichtung erzielt werden. Beim Aufprall des Kraftfahrzeugs auf ein massives Hindernis beginnt sich bei dieser Schutzvorrichtung der Gassack aufzublasen, indem ein Zündstrom auf den Zünder eines Gasgenerators geschaltet wird. Der aufgrund seines Massenträgheitsmoments sich in Fahrtrichtung bewegende Oberkörper des Fahrzeuglenkers schlägt auf den voll aufgeblasenen Gassack. Über Ausströmöffnungen läßt dieser sofort das Gas in genau definierter Menge entweichen, so daß der Oberkörper weich und ohne große Rückprallkräfte aufgefangen wird. Da im Fall eines Aufpralls des Kraftfahrzeugs auf ein massives Hindernis die Körperbewegung des auf der Beifahrerseite sitzenden Fahrgastes ähnlich verläuft, ist auch die auf der Beifahrerseite benutzte Aufprall-Schutzvorrichtung mit einer Gassackeinheit ähnlich wie auf der Fahrerseite aufgebaut. Der wesentliche Unterschied besteht darin, daß zwei Gasgeneratoren Verwendung finden, um das vergleichsweise doppelt so große Gassackvolumen ähnlich schnell aufzublasen. Das fehlende Lenkrad und die demzufolge größere Distanz zum Armaturenbrett und zur Windschutzscheibe müssen hier durch das größere Gassackvolumen ausgeglichen werden. In der DE-C-3 800 652 und der DE-A-3 918 281 ist eine Aufprall-Schutzvorrichtung mit Gassackeinheit für die Beifahrerseite eines Kraftfahrzeugs beschrieben, bei der die aus einem zusammengefalteten Gassack und einem Gasgenerator gebildete Gassackeinheit hinter einer Austrittsöffnung im Armaturenbrett angeordnet ist. Ein als Klappe ausgebildeter Teil des Armaturenbretts ist an dessen oberem Rand schwenkbar befestigt und deckt die Öffnung ab. Im Falle eines Aufpralls auf ein massives Hindernis wird die Klappe beim Aufblasen des Gassacks durch Druck nach oben geschwenkt, so daß der Gassack durch die Öffnung austreten kann. Nach der DE-A-3 918 281 besteht die Klappe aus einer biegsamen, in eine Schaumstoffschicht eingebetteten Einlegematte, die an dem in Frontrichtung quer zur Fahrzeugrichtung liegenden Klappenrand einen Scharnierbereich bildet, wobei die Einlegematte aus einem elastischen Kunststoff mit einer Armierungseinlage, insbesondere aus glasfaserverstärktem Kunststoffmaterial und/oder Polyfilamentgarn, besteht. Die Herstellung und die Montage derartig gestalteter Klappen ist mit einem relativ hohen Aufwand verbunden. Darüber hinaus besteht die Gefahr, daß der Gassack beim Austritt durch die Öffnung des Armaturenbretts durch die nach oben geschwenkte Klappe behindert wird.

Aufgabe der vorliegenden Erfindung ist es, die eingangs beschriebene Aufprall-Schutzvorrichtung dahingehend zu verbessern, daß die Abdeckhaube nicht nur konvex, sondern auch konkav geformt sein kann, eine plastische Verformung der Abdeckhaube bei stoßartiger Belastung unterbleibt und die Abdeckhaube vollständig aus dem Austrittsweg des sich aufblasenden Gassacks entfernt ist.

Gelöst ist diese Aufgabe dadurch, daß eine gattungsgemäße Aufprall-Schutzvorrichtung die Merkmale des Kennzeichnungsteils des Patentanspruchs 1 aufweist.

Der Vorteil der erfindungsgemäßen Aufprall-Schutzvorrichtung ist darin zu sehen, daß die Abdeckhaube je nach Gestalt des Armaturenbretts konkav oder konvex gebogen sein kann. Darüber hinaus wird durch die Armierungsschicht eine dauerhafte Verformung der Abdeckhaube infolge einer stoßartigen Belastung verhindert. Durch die Gestaltung der Armierungsschicht im Bereich der Biegezone werden die Abschnitte der Abdeckhaube beim Austritt des Gassacks durch die Öffnung des Armaturenbretts so weit nach oben bzw. nach unten geschwenkt, daß sie den Aufblasvorgang des Gassacks nicht behindern.

Im Falle der Auslösung der Aufprall-Schutzvorrichtung reißt die Kunststoffschicht der Abdeckhaube entlang der Sollreißlinie auf. Die Armierungsschicht wird zum Fahrgastraum hin aufgebogen und der Gassack tritt in den Fahrgastraum aus.

Damit die weiche elastische Kunststoffschicht fest mit der Armierungsschicht verbunden werden kann, ist diese mit zahlreichen Durchbrechungen versehen, die vorzugsweise aus regelmäßig angebrachten Löchern bestehen, wobei die Armierungsschicht zweckmäßig eine netzförmige Struktur besitzt. Durch die Durchbrechungen kann der Kunststoff auch auf die der Lenksäule zugewandten Seite der Armierungsschicht treten und dort eine geschlossene Schicht bilden.

Die Erfindung ist in der Zeichnung beispielhaft dargestellt und wird nachfolgend erläutert. Es zeigen:

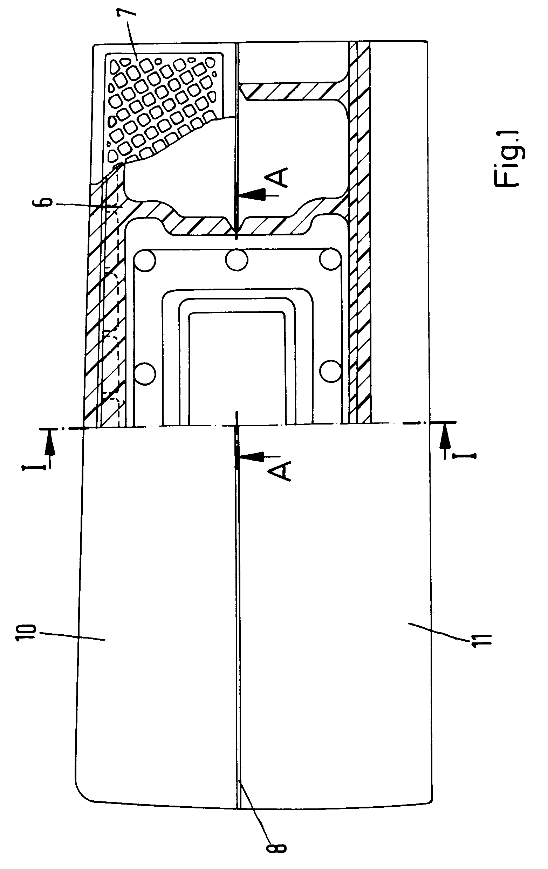

- Fig. 1: eine Draufsicht mit einem Ausbruch auf die Aufprall-Schutzvorrichtung
und

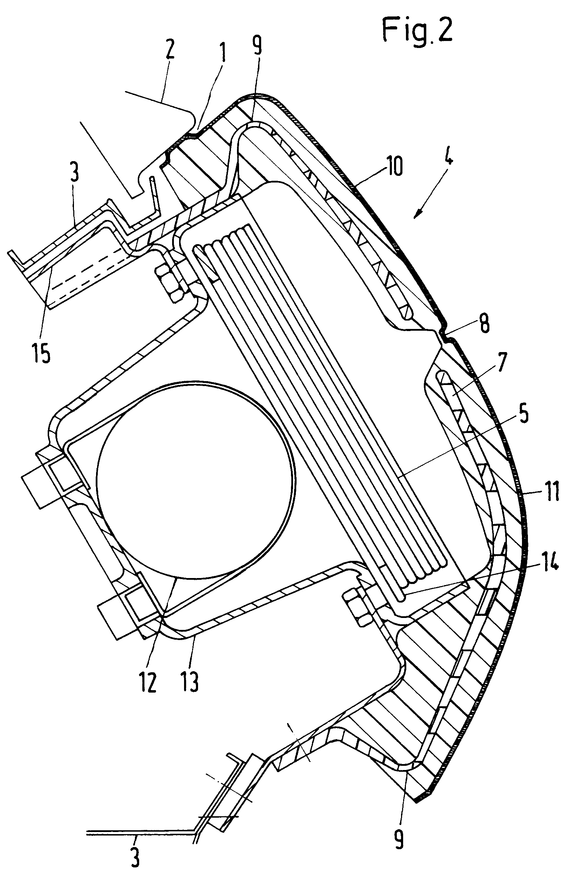

- Fig. 2: einen Schnitt entlang der Linie I-I der Fig. 1.

In der Öffnung (1) des Armaturenbretts (2) mit dem dahinter gestellfest angebrachten Stahlblechrahmen (3) ist die Gassackeinheit (4) eingesetzt. Die Gassackeinheit (4) besteht aus dem zusammengefalteten Gassack (5), auf dem die Abdeckhaube (6) aus Polyurethanschaum mit der darin eingebetteten, netzartig durchbrochenen Armierungsschicht (7) aus Polyethylen unmittelbar aufliegt. Die Abdeckhaube (6) ist durch die horizontale, quer zur Fahrzeugrichtung verlaufende und sich an ihren Enden schräg zur Seite erstreckende, durch eine dünne Polyurethanschaumschicht gebildete Sollreißlinie (8) in den am oberen und unteren Rand des Armaturenbretts in der Biegezone (9) scharnierartig angelenkten Abschnitt (10, 11) unterteilt. Die Armierungsschicht (7) ist in der Biegezone (9) mit einer Ausbiegung versehen. Der das Druckgas für das Befüllen des Gassacks (5) erzeugende Gasgenerator (12) ist mit dem Träger (13), der den Gassack (5) und dessen Arretierflansch (14) aufnimmt, und über den Blechstreifen (15) mit dem gestellfest hinter der Öffnung (1) angebrachten Stahlblechrahmen (3) verbunden. Auf dem Umfang des Blechsteifens ist die Abdeckhaube (6) befestigt. Der Gasgenerator (12) besteht aus dem das Zündelement enthaltenden Zentralkörper, an dem strahlenförmig zwei Druckbehälter befestigt sind. Das erzeugte Gas tritt über die in den Druckbehältern enthaltenen Öffnungen in den Gassack (5) aus. Es ist auch möglich, das Zündelement an den strahlenförmigen Druckbehältern anzuordnen.

## Patentansprüche

1. Aufprall-Schutzvorrichtung für die Beifahrerseite eines Kraftfahrzeugs mit in einer Öffnung (1) des Armaturenbretts (2) mit dahinter gestellfest angebrachtem Blechrahmen (3) eingesetzter Gassackeinheit (4), bestehend aus einem zusammengefalteten aufblasbaren Gassack (5), einer über dem Gassack liegenden Abdeckhaube (6) aus einer elastischen Kunststoffschicht, in die eine Armierungsschicht (7) aus hartem Kunststoff eingebettet ist und die durch eine im wesentlichen horizontale, quer zur Fahrzeugrichtung verlaufende und sich von ihren Enden aus in Fahrzeugrichtung erstreckende Sollreißlinie (8) in einen zum oberen Rand und einen zum unteren Rand des Armaturenbretts hin klappbaren, in der Biegezone (9) scharnierartig ausgebildeten Abschnitt (10, 11) unterteilt ist, einem das Druckgas für das schlagartige Füllen des Gassacks erzeugenden Gasgenerator (12) und einem mit dem Blechrahmen verbundenen Gasgeneratorträger (13), der den Gassack und dessen Arretierflansch (14) aufnimmt und auf dessen Umfang die Abdeckhaube befestigt ist, dadurch gekennzeichnet, daß in den oberen und unteren Abschnitt (10, 11) der Kunststoffschicht (6) jeweils eine netzförmige Armierungsschicht (7) eingebettet ist, zwischen deren gegenüberliegenden Rändern beidseitig der die Sollreißlinie (8) einschließenden horizontalen Ebene ein durch eine dünnwandige Kunststoffschicht überbrückter Spalt besteht.

## Claims

1. An impact protection means for the passenger side of a motor vehicle, comprising an airbag unit (4) inserted in an opening (1) in the dashboard (2) with a sheet metal frame (3) attached securely to the frame therebehind, which unit consists of a collapsed inflatable airbag (5), a covering hood (6) consisting of an elastic plastic layer located above the airbag, into which layer a reinforcement layer (7) of hard plastic is embedded and which is divided by a substantially horizontal intended tear line (8) extending transversely to the direction of the vehicle and extending from its ends outwards in the direction of the vehicle into a section (10) which can be folded towards the upper edge and a section (11) which can be folded towards the lower edge of the dashboard, which sections are made to be hinge-like in the bending zone (9), a gas generator (12) which generates the compressed gas for the sudden filling of the airbag and a gas generator support (13) connected to the sheet metal frame, which support receives the airbag and the retaining flange (14) thereof and to the periphery of which the covering hood is attached, characterised in that a net-like reinforcement layer (7) is embedded in each of the upper and lower sections (10, 11) of the plastic layer (6), between the opposing edges of which reinforcement layer there is a gap bridged by a thin-walled plastic layer on either side of the horizontal plane enclosing the intended tear line (8).

## Revendications

1. Dispositif de protection contre les chocs du côté d'un véhicule automobile, où est assis le passager à côté du conducteur, comportant une unité formant sac à gaz (4), qui est insérée dans une ouverture (1) du tableau de bord, au moyen d'un cadre en tôle (3) monté en arrière et solidaire du bâti, et qui est constituée d'un sac à gaz (5) gonflable replié, un capot de fermeture (6) situé au-dessus du sac à gaz et formé d'une couche élastique de matière plastique, dans laquelle est insérée une couche d'armature (7) en une matière plastique dure et qui est subdivisée, par une ligne (8) destinée à se déchirer, qui est essentiellement horizontale et s'étend transversalement à la direction du véhicule et, par ses extrémités, dans la direction du véhicule, en des parties (10,11), dont l'une est rabattable en direction du bord supérieur et l'autre en direction du bord inférieur du tableau de bord, et qui sont agencées en forme de charnières dans la zone de coudage (9), un générateur de gaz (12), qui produit le gaz comprimé pour le remplissage brusque du sac à gaz, et un support (13) du générateur de gaz, qui est relié au cadre en tôle, qui reçoit le sac à gaz et sa bride de blocage (14) et sur la périphérie duquel est fixé le capot de fermeture, caractérisé par le fait que dans les parties supérieure et inférieure (10,11) de la couche de matière plastique (6) sont insérées respectivement des couches d'armature (7) en forme de filet, et qu'une fente, qui est recouverte par une couche de matière plastique à paroi mince, est formée entre les bords de la couche d'armature, qui sont situés en vis-à-vis, des deux côtés du plan horizontal par lequel passe la ligne (8) ou doit s'effectuer la déchirure.
